# EUROPÄISCHE PATENTSCHRIFT

(11) **EP 4 731 588 B1**
(45) Veröffentlichungstag und Bekanntmachung des Hinweises auf die Patenterteilung: **07.10.2026**
(21) Anmeldenummer: 25764019.3
(22) Anmeldetag: 04.09.2025
(51) Int. Cl.: C04B 7/36

(54) **VERFAHREN ZUM FLEXIBLEN BETREIBEN EINER KOHLENDIOXIDABSCHEIDUNG IN EINEM ZEMENTWERK**
METHOD FOR FLEXIBLY CARRYING OUT A CARBON DIOXIDE CAPTURING PROCESS IN A CEMENT PLANT
PROCÉDÉ DE MISE EN OEUVRE SOUPLE D'UNE SÉPARATION DE DIOXYDE DE CARBONE DANS UNE CIMENTERIE

(30) Priorität: 11.09.2024 BE 202405606; 11.09.2024 DE 102024126027
(43) Veröffentlichungstag der Anmeldung: 29.04.2026
(73) Patentinhaber: thyssenkrupp Polysius GmbH, 59269 Beckum (DE); thyssenkrupp AG, 45143 Essen (DE)
(72) Erfinder: BEISHEIM, Theodor, 33378 Rheda-Wiedenbrück (DE); LAMPE, Karl, 59320 Ennigerloh (DE); DINKOVA, Anna Ivanova, 44287 Dortmunt (DE); PANERU, Manoj, 48231 Warendorf/Milte (DE)
(74) Vertreter: Moser Götze & Partner Patentanwälte mbB
(86) Internationale Anmeldenummer: PCT/EP2025/075211
(87) Internationale Veröffentlichungsnummer: WO 2026/057454

(56) Entgegenhaltungen:
- EP-B1- 2 340 236
- EP-B1- 2 870 116
- EP-B1- 3 752 780

## Beschreibung

Die Erfindung betrifft ein Verfahren, um die partielle Abscheidung von Kohlendioxid in einem mit einem Oxyfuel-Calcinator nachgerüsteten Zementwerk in Abhängigkeit von der Verfügbarkeit von regenerativ erzeugtem Strom zu regeln, um im langfristigen Mittel ein Optimum zu erreichen.

Die Zementindustrie zählt zu den stärksten Emittenten von Kohlendioxid, da aus dem Kalkstein selbst Kohlendioxid freigesetzt wird. Selbst bei der Verwendung von fossilen Brennstoffen stammen somit etwa $\frac{2}{3}$ des CO₂ aus dem Kalkstein und nur etwa ⅓ aus dem Brennstoff. Dieses eröffnet die Möglichkeit bereits mit einer einfachen Nachrüstung im Bereich des Calcinators einen hohen Anteil des CO₂ in einfacher Wiese abtrennen zu können, da im Calcinator der größte Anteil der Entsäuerung, also der Freisetzung von Kohlendioxid aus dem Kalkstein erfolgt.

Eine besonders effiziente Methode zur Abtrennung von Kohlendioxid stellt das Oxyfuel-Verfahren dar. Idealisiert ausgedrückt wird anstelle von Luft reiner Sauerstoff verwendet. Durch die Verbrennung wird der Sauerstoff zu Kohlendioxid und Wasser umgesetzt, zusätzlich kommt Kohlendioxid aus dem Kalkstein dazu. Am Ende besteht das Gas idealisiert und vereinfacht aus Kohlendioxid und Wasserdampf. Dadurch entfällt die sehr aufwändige Abtrennung des Kohlendioxids. Da die Realität leider nicht so idealisiert ist und auch durch den Brennstoff noch weitere Komponenten eingetragen werden können, Nebenluft nie ganz vermieden werden kann und auch eine vollständige Abtrennung des Stickstoffs vom Sauerstoff wirtschaftlich nicht sinnvoll ist, erfolgt am Ende eine gegenüber anderen Verfahren jedoch stark vereinfachte Gasreinigung. Somit treten zum normalen Zementprozess einmal die Luftzerlegung und zum anderen die Verdichtung und Aufreinigung des Kohlendioxids dem Prozess hinzu. Diese Prozesse werden aber im Regelfall mit elektrischer Energie betrieben, die im bisherigen Klinkerprozess eine untergeordnete Rolle spielen.

Aus der WO 2019/211 196 A1 ist eine Oxyfuel-Klinkerherstellung ohne Rezirkulation der Vorwärmerabgase bekannt.

Da es mit diesem Verfahren um die Vermeidung von Kohlendioxidemissionen und damit die Klimaneutralität des Klinkerherstellungsprozesses geht, ist die weitestgehende Nutzung regenerativer Stromquellen für die CO₂-Bilanz besonders wichtig. Regenerative Quellen für elektrische Energie unterliegen jedoch Schwankungen, es ist also nicht zu jeder Zeit die gleiche Menge an regenerativ erzeugter elektrischer Energie verfügbar.

Aus der EP 2340 236 B1 ist ein Verfahren und eine Anlage zur Herstellung von Zementklinker bekannt.

Aus der EP 3 752 780 B1 ist eine Oxyfuel-Klinkerherstellung ohne Rezirkulation der Vorwärmerabgase bekannt.

Aus der EP 2 870 116 B1 ist ein Verfahren und eine Anlage zur Herstellung von Zementklinker aus Zementrohmehl bekannt.

Aufgabe der Erfindung ist es, den Betrieb einer solchen mit einem Oxyfuel-Calcinator nachgerüsteten Zementanlage in Hinblick auf die schwankende regenerative Stromerzeugung anzupassen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient dem Betreiben einer Vorrichtung zur thermischen Behandlung mineralischer Stoffe, also insbesondere einer Zementanlage zur Herstellung von Klinker . Die Vorrichtung weist einen Vorwärmer, einen Calcinator, einen Ofen und üblicherweise einem Klinkerkühler auf. Dieses entspricht der üblichen Konfiguration eines Zementwerkes. Der mineralische Stoff wird anteilig in den Vorwärmer eingebracht. Vom Vorwärmer wird der vorgewärmte Stoff in den Calcinator und vom Calcinator in den Ofen geführt und dort thermisch behandelt. Dieses entspricht soweit der üblichen Fahrweise einer Zementanlage. Der Gasstrom des Ofens wird am Calcinator vorbei geführt. Dieses entspricht nicht der klassischen Fahrweise einer konventionellen Zementanlage, bei der die heißen Gase aus dem Ofen eben in den Calcinator geführt werden, um so die Wärme zu nutzen. Die Vorrichtung weist eine Sauerstoffquelle auf. Eine Sauerstoffquelle kann zum Beispiel eine Luftzerlegung sein, es kann sich aber auch um einen Tank für flüssigen Sauerstoff handeln. Bevorzugt liegt der Sauerstoffgehalt des sauerstoffhaltigen Gases, welches die Sauerquelle verlässt, bei mehr als 50 Vol.-% Sauerstoff, bevorzugt bei mehr als 75 Vol.-% Sauerstoff, weiter bevorzugt bei mehr als 90 Vol.-% Sauerstoff und besonders bevorzugt bei mehr als 95 Vol.-% Sauerstoff. Das sauerstoffreiches Gas wird von der Sauerstoffquelle zum Calcinator geführt. Der Gasstrom, welcher durch Verbrennung und Kohlendioxidfreisetzung aus dem mineralischem Material reich an Kohlendioxid ist, wird vom Calcinator in den Vorwärmer geleitet. Die Vorrichtung weist eine Kohlendioxidaufarbeitungsvorrichtung auf. Die Kohlendioxidaufarbeitungsvorrichtung ist gasstromab des Calcinators angeordnet, also eben nicht gasstromab des Ofens. Es wird also nur der extrem kohlendioxidhaltige Gasstrom aus dem Calcinator, der ungefähr 75 bis 80 % des gesamten Kohlendioxids aus dem Gesamtprozess aufweist der Kohlendioxidaufarbeitungsvorrichtung zugeführt. Dieses wiederum bedeutet, dass eben nicht alle anderen Anlagenteile, insbesondere der Ofen, entsprechend gasdicht umgebaut werden müssen, sodass eben eine einfache Nachrüstmöglichkeit zur raschen Einsparung von ungefähr 75 bis 80 % der CO₂-Emissionen in einfacher Wiese möglich ist. Somit kann aber auch die Kohlendioxidaufarbeitungsvorrichtung auf einen extrem hohen Anteil an Kohlendioxid und insbesondere einen sehr geringen Anteil an Stickstoff ausgelegt werden, was wiederum den Energieaufwand im Betrieb minimiert. Hierbei kann vor der Kohlendioxidaufarbeitungsvorrichtung beispielsweise ein Staubfilter und/oder ein Wärmetauscher angeordnet sein. Die Vorrichtung weist einen Ofencalcinator und einen Ofenvorwärmer auf. Beispielsweise und bevorzugt sind diese Komponenten Altkomponenten einer bestehenden Altanlage, die um den neuen, im Oxyfuel-Verfahren betriebenen Calcinator erweitert wurde. Der Gasstrom wird entsprechend aus dem Ofen in den Ofencalcinator und aus dem Ofencalcinator in den Ofenvorwärmer geleitet. Der mineralische Stoff wird anteilig in den Ofenvorwärmer eingebracht, also auf den Vorwärmer und den Ofenvorwärmer aufgeteilt. Dadurch kann die Abwärme aus beiden Prozessen zurückgewonnen werden. Der den Ofenvorwärmer verlassende Feststoffstrom wird auf den Calcinator und den Ofencalcinator aufgeteilt. Hierbei ist auch möglich den gesamten Feststoffstrom ausschließlich dem Calcinator zuzuführen.

Erfindungsgemäß erfolgt eine lastabhängige anteilige Rückführung des dem Vorwärmer verlassenden Gasstromes in das sauerstoffreiches Gas zwischen der Sauerstoffquelle und dem Calcinator. Diese anteilige Rückführung ermöglicht es, den Calcinator auf einer geringeren Teillast zu fahren, ohne dabei die Betriebsparameter des Calcinators negativ zu beeinflussen. Reduziert man die Last am Calcinator, so wird weniger Brennstoff und Material zugeführt, es entsteht deutlich weniger Kohlendioxid. Dieses wird durch die rückgeführte Menge kompensiert, sodass Strömungsverhältnisse und Verweilzeit im Calcinator über unterschiedliche Lastzustände annähernd konstant gehalten werden können und somit die Produktqualität keine Funktion des Lastzustandes ist.

Hierbei wird der Lastzustand des Calcinators in Abhängigkeit der Verfügbarkeit von regernativ erzeugtem Strom (bevorzugt bei Erzeugung auf dem Gelände) oder in Abhängigkeit von Preis (bevorzugt bei Bezug über ein Netz als Äquivalent der Verfügbarkeit). Steht also wenig Strom zur Verfügung, so wird der Calcinator in einen geringen Teillastbetrieb genommen, beispielswese 60 %. Damit werden aber auch nur noch etwa 60 % des Sauerstoffs benötigt und auch nur noch etwa 60 % an Kohlendioxid abgegeben (Effizienzverluste zur Vereinfachung vernachlässigt). Damit wird die Teillast direkt auch auf die Sauerstoffquelle und auf die Kohlendioxidaufarbeitungsvorrichtung übertragen und somit im genannten Beispiel ungefähr 60 % der elektrischen Energie eingespart.

Würde man nun bei Volllast von einer Abscheidung von etwa 75 bis 80 % des gesamten Kohlendioxids ausgehen, so würde im diesem Teillastzustand die Abscheidung auf ungefähr unter 50 % sinken, während die Produktion des Klinkers unverändert durchläuft und der Ofencalcinator entsprechend die Teillastabsenkung des Calcinators kompensiert und so eine konstante Produktion mit unveränderten Bedingungen im Ofen erfolgt.

Alternativ kann auch die Gesamtproduktion gedrosselt werden, um den Sauerstoffverbrauch sowie den CO₂-Strom zur Kohlendioxidaufbereitungsvorrichtung zu verringern, gleichzeitig aber die Abscheiderate des Kohlendioxids nicht zu reduzieren, was wiederum einen größeren Einfluss auf das Produkt hat, wenn der Ofen nur im Teillastbetrieb betrieben wird, da dort das mineralische Material nicht in einem Gasstrom behandelt wird, sondern als Festbett beziehungsweise Wanderbett vorliegt.

In einer weiteren Ausführungsform der Erfindung wird das sauerstoffreiches Gas vor dem Calcinator erwärmt. Bisher stammte das dem Calcinator zugeführte Gas in konventionellen Anlagen aus dem Ofen, kam also mit sehr hoher Temperatur in den Calcinator. Da im Calcinator gerne auch Ersatzbrennstoffe verwendet werden, soll hier durch eine hohe Eingangstemperatur des Gasstroms eine sichere Zündung und ein zuverlässiger Ausbrand sichergestellt werden. Das zugeführte sauerstoffhaltige Gas komm nun kalt von der Sauerstoffquelle. Da dieses gerade bei der Verwendung von Ersatzbrennstoffen im Calcinator kritisch ist ist eine Vorwärmung vorteilhaft.

In einer weiteren Ausführungsform der Erfindung wird das sauerstoffreiche Gas vor Eintritt in den Calcinator auf wenigstens 900 °C, bevorzugt auf wenigstens 1050 °C, erhitzt. Dieses bezieht sich auf die Eintrittstemperatur in den Calcinator. Wird, insbesondere im Teillastbetrieb, das sauerstoffreiche Gas mit der Rückführung des dem Vorwärmer verlassenden Gasstromes vermischt, so gilt dieses für die Mischtemperatur. Hierbei kann erst die Vermischung (davor oder danach oder anteilig gemischt) erfolgen und dann eine gemeinsame Erwärmung oder der Sauerstoff wird stärker erwärmt und dann mit dem kohlendioxidreichen Rückführungsgas auf diese Temperatur gemischt.

In einer weiteren Ausführungsform der Erfindung wird das sauerstoffreiche Gas vor Eintritt in den Calcinator auf höchsten 1300 °C, bevorzugt auf höchstens 1200 °C, erhitzt.

In einer weiteren Ausführungsform der Erfindung wird das sauerstoffreiches Gas mittels Verbrennung erwärmt. Da die Zündung sicher bei geringen Temperaturen erfolgen muss, wird bevorzugt ein feinkörniger, flüssiger oder gasförmiger Brennstoff wie Kohlenstaub, Öl oder Gas eingesetzt.

In einer weiteren Ausführungsform der Erfindung wird das sauerstoffreiches Gas mittels eines Wärmetauschers durch das den Vorwärmer verlassende Gas erwärmt. Der Wärmetauscher kann hierbei direkt oder mit einem Wärmeüberträger zweiteilig ausgeführt sein.

Bevorzugt kann auch erst eine Erwärmung mittels Wärmetauscher und anschließend durch Verbrennung erfolgen.

In einer weiteren Ausführungsform der Erfindung weist die Vorrichtung einen hinter dem Ofen angeordneten Materialkühler auf. Der Materialkühler dient dazu, wie aus dem Stand der Technik bekannt, das aus dem Ofen kommende Produkt abzukühlen und die Wärme auf ein Gas zu übertragen, welches dann nach dem Stand der Technik beispielsweise und bevorzugt dem Ofen zugeführt und dadurch selber vorgewärmt ist. Das sauerstoffreiche Gas wird als Kühlgasstrom durch den Materialkühler geführt und dadurch im Materialkühler erwärmt. Bevorzugt weist der Materialkühler drei Zonen auf, wobei eine erste Zone ein dem Ofen zugeführtes Luftgemisch vorwärmt, eine zweite Zone das sauerstoffreiche dem Calcinator zugeführte Gas vorwärmt und eine dritte Zone, in der das Kühlgas weder dem Calcinator noch dem Ofen zugeführt, sondern beispielsweise direkt an die Umgebung abgegeben wird. Diese dritte Zone ist üblicherweise die letzte und dient zur letzten Abkühlung auf eine Temperatur, mit der das Produkt einfach zu handhaben ist.

In einer weiteren Ausführungsform der Erfindung weist die Vorrichtung einen hinter dem Ofen angeordneten Materialkühler auf. Der Materialkühler wird von einem Kühlgasstrom durchströmt. Das sauerstoffreiches Gas wird mittels des Kühlgasstromes in einem Wärmetauscher erwärmt. Die indirekte Methode hat den Vorteil, dass so zuverlässig ein Falschgaseintrag in das sauerstoffhaltige Gas vermieden werden kann.

In einer weiteren Ausführungsform der Erfindung wird bei sich verringernder Verfügbarkeit elektrischer Energie die anteilige Rückführung des dem Vorwärmer verlassenden Gasstromes in das sauerstoffreiches Gas zwischen der Sauerstoffquelle und dem Calcinator erhöht. Gleichzeitig wird die Last des Calcinators reduziert, also weniger Brennstoff und weniger mineralisches Material eingebracht. Brennstoff und zu calcinierendes mineralisches Material stehen durch den Energiebedarf der Reaktion in einem bekannten Verhältnis. Dadurch wird aber bei einem Absenken der Teillast sowohl durch die Verbrennung als auch durch die Reaktion eben weniger Kohlendioxid gebildet. Um dennoch die Strömungsbedingungen im Calcinator aufrecht erhalten zu können, wird eben kohlendioxidhaltiges Gas zurückgeführt. Hierbei erfolgt die Regelung bevorzugt so, dass der Anteil der Rückführung so gewählt wird, den aus dem Calcinator austretenden Volumenstrom des CO₂-haltigen Gases konstant zu halten. Der Effekt ist, dass eben nur der um die Rückführung reduzierte Gasstrom der Kohlendioxidaufarbeitungsvorrichtung zugeführt wird. Werden also beispielsweise etwa ⅓ zurückgeführt, so erreichen eben auch nur etwa $\frac{2}{3}$ die Kohlendioxidaufarbeitungsvorrichtung, die damit einen deutlich verringerten Energiebedarf hat. Ebenso muss die Sauerstoffquelle auch nur etwa $\frac{2}{3}$ an sauerstoffhaltigem Gas bereitstellen (unter Vernachlässigung der Effizienzverschlechterung) und fährt somit auch elektrische energiesparend im Teillastbetrieb. Dadurch kann eine Zeit mit verminderter Produktion an regenerativ erzeugtem Strom überbrückt werden, ohne dass dieses einen Einfluss auf die Produktqualität hätte.

In einer weiteren Ausführungsform der Erfindung wird bei sich verringernder Verfügbarkeit elektrischer Energie der Anteil an des in den Vorwärmer eingebrachten mineralischen Stoffes im Verhältnis zum in den Ofenvorwärmer eingebrachten mineralischen Stoffes reduziert und/oder der Anteil des den Ofenvorwärmer verlassende Feststoffstrom, der dem Calcinator zugeführt wird, erniedrigt. Dadurch gelangt weniger zu calcinierendes mineralisches Material in den Calcinator, der Calcinator wird im reduzierten Teillastbetrieb betrieben. Wird der Anteil des den Ofenvorwärmer verlassende Feststoffstrom erhöht, der dem Ofencalcinator zugeführt wird, so kann die Produktionskapazität aufrecht erhalten bleiben und gleichzeitig durch die konstante Betriebsweise die Produktqualität unverändert bleiben.

In einer weiteren Ausführungsform der Erfindung werden bei minimaler Verfügbarkeit elektrischer Energie 30 bis 60 Vol.-% des dem Vorwärmer verlassenden Gasstromes in das sauerstoffreiche Gas zwischen der Sauerstoffquelle und dem Calcinator zurückgeführt. Bei maximaler Verfügbarkeit elektrischer Energie werden weniger als 15 Vol.-%, bevorzugt weniger als 5 Vol.-%, besonders bevorzugt 0 %, des dem Vorwärmer verlassenden Gasstromes in das sauerstoffreiche Gas zwischen der Sauerstoffquelle und dem Calcinator zurückgeführt.

In einer weiteren Ausführungsform der Erfindung wird bei Volllast der den Ofenvorwärmer verlassende Feststoffstrom vollständig dem Calcinator zugeführt.

Nachfolgend ist das erfindungsgemäße Verfahren anhand eines in den Zeichnungen dargestellten Ausführungsbeispiels näher erläutert.
- Fig. 1: erstes Beispiel
- Fig. 2: zweites Beispiel
- Fig. 3: drittes Beispiel

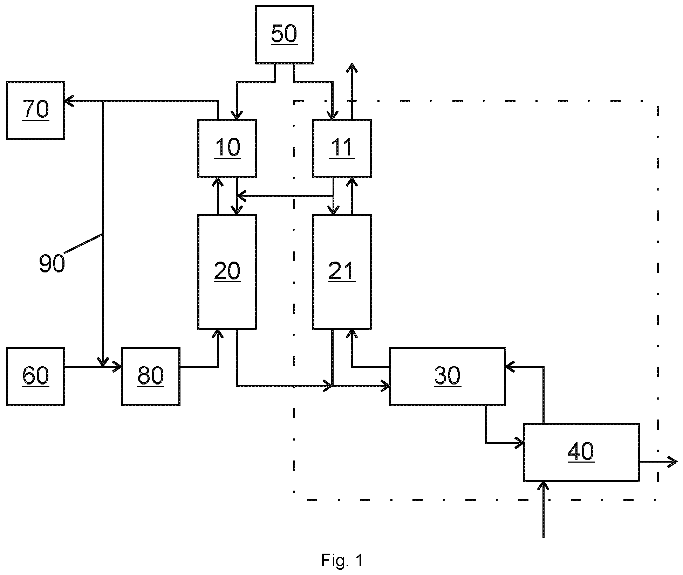

In Fig. 1 ist eine erste beispielhafte Vorrichtung zur thermischen Behandlung mineralischer Stoffe gezeigt. Die Vorrichtung besteht beispielsweise aus einer bestehenden Bestandsanlage (rechts umrandet dargestellt) und einen auf der linken Seite dargestellten neu ergänzten Calcinator 20, welcher nach dem Oxyfuelprinzip arbeitet. Dazu weist die linke Seite eine Sauerstoffquelle 60 auf. Das sauerstoffhaltige Gas der Sauerstoffquelle 60 wird über eine Gasvorwärmung 80 in den Calcinator 20 geführt. Die Gasvorwärmung 80 kann entweder durch Verbrennung oder elektrisch erfolgen. Zur Wärmerückgewinnung wird der kohlendioxidhaltige Gasstrom aus dem Calcinator 20 in den Vorwärmer 10 überführt und von dort zu Kohlendioxidaufarbeitungsvorrichtung 70.

Das mineralische Material, zum Beispiel Kalkstein kommt aus einem Lager 50 und wird auf den Vorwärmer 10 und den Ofenvormwärmer 11 aufgeteilt, beispielsweise werden im Vollastbetrieb 40 bis 60 Gew.-% auf den Vorwärmer 60 bis 40 Gew.-% auf den Ofenvorwärmer gegeben. Das vorgewärmte Material wird bei Volllast sowohl aus dem Vorwärmer 10 als auch dem Ofenvorwärmer 11 vollständig in den Calcinator 20 überführt. Nach dem Calcinieren wird das calcinierte Material aus dem Calcinator 20 in den Ofen 30 überführt, dort gebrannt und anschließend im Materialkühler 40 abgekühlt.

Insbesondere für den Teillastbetrieb weist die Vorrichtung eine Rückführung 90 auf. Ist beispielsweise regenerativ erzeugter Strom wenig verfügbar, so kann beispielsweise der Calcinator bei einer Auslastung von 50 % betrieben werden. Entsprechend wird durch die Rückführung ein Anteil von 50 % des Gasstromes zurückgeführt. Damit erreicht nur die Hälfte des kohlendioxidhaltigen Gasstromes die Kohlendioxidaufarbeitungsvorrichtung 70, die somit einen entsprechend verringerten Strombedarf hat. Ebenso wird die Sauerstoffquelle 60, beispielsweise eine Luftzerlegung nach dem Membranverfahren, mit entsprechend verringerter Teillast betrieben, sodass auch hier elektrische Energie eingespart wird. Beispielsweise wird auch nur die Hälfte des mineralischen Materials aus dem Lager auf den Vorwärmer 10 und den Ofenvorwärmer 11 aufgebracht, sodass die Vorrichtung insgesamt mit einer Teillast von 50 % betrieben wird. Alternativ uns bevorzugt wird der Ofencalcinator 21 in diesem Fall so betrieben, dass insgesamt die Produktion weiter unter Volllast bleibt, damit auch der Ofen 30 kontinuierlich unverändert arbeitet. In diesem Fall wird lediglich die Menge des abgetrennten Kohlendioxids reduziert.

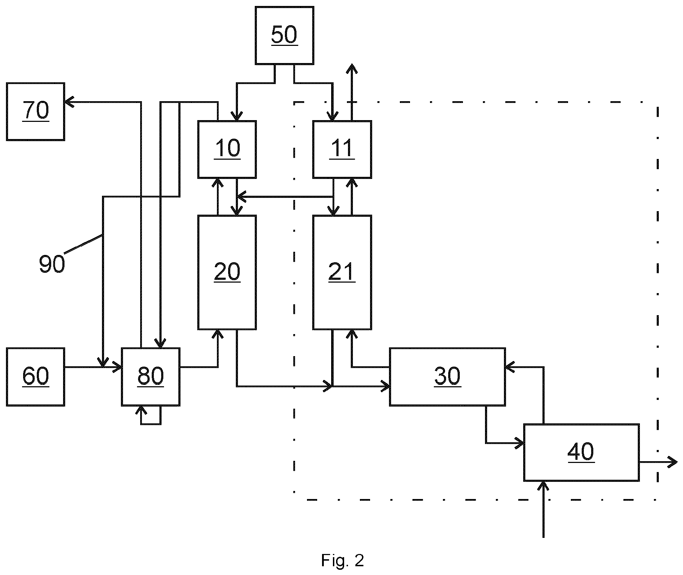

Fig. 2 zeigt ein zweites Beispiel als Variante des ersten Beispiels. Zur Vorwärmung des sauerstoffreichen Gases wird in der Gasvorwärmung 80 der Abgasstrom des Vorwärmers 10 genutzt, der Gasvorwärmer ist als Wärmetauscher ausgebildet. Alternativ zu dem hier gezeigten zweiten Beispiel kann auch eine indirekte Wärmeübertragung erfolgen, also mit zwei Wärmetauschern und einem Wärmeübertragungsmedium dazwischen.

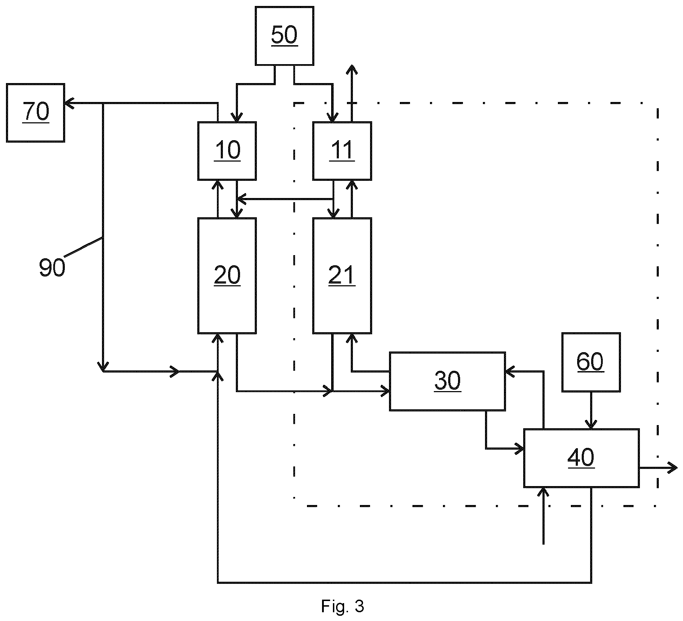

In Fig. 3 zeigt ein drittes Beispiel als Variante des ersten Beispiels. Zur Vorwärmung des sauerstoffreichen Gases wird das sauerstoffreiche Gas durch den Materialkühler 40 geführt und so vorgewärmt. Auch hier ein als alternative Ausführung eine indirekte Wärmeübertragung denkbar, sodass ein Gas, beispielsweise Luft durch den Materialkühler 40 geführt wird und das das sauerstoffreiche Gas in einem Wärmetauscher erwärmt.

Bezugszeichen
- 10: Vorwärmer
- 11: Ofenvorwärmer
- 20: Calcinator
- 21: Ofencalcinator
- 30: Ofen
- 40: Materialkühler
- 50: Lager
- 60: Sauerstoffquelle
- 70: Kohlendioxidaufarbeitungsvorrichtung
- 80: Gasvorwärmung
- 90: Rückführung

## Patentansprüche

1. Verfahren zum Betreiben einer Vorrichtung zur thermischen Behandlung mineralischer Stoffe, wobei die Vorrichtung einen Vorwärmer (10), einen Calcinator (20) und einen Ofen (30) aufweist, wobei der mineralische Stoff anteilig in den Vorwärmer (10) eingebracht wird, vom Vorwärmer (10) in den Calcinator (20) und vom Calcinator (20) in den Ofen (30) geführt wird, wobei der Gasstrom des Ofens (30) am Calcinator (20) vorbei geführt wird, wobei die Vorrichtung eine Sauerstoffquelle (60) aufweist, wobei ein sauerstoffreiches Gas mit mehr als 50 Vol.-% Sauerstoff von der Sauerstoffquelle (60) zum Calcinator (20) geführt wird, wobei der Gasstrom vom Calcinator (20) in den Vorwärmer (10) geleitet wird, wobei die Vorrichtung eine Kohlendioxidaufarbeitungsvorrichtung (70) aufweist, wobei die Kohlendioxidaufarbeitungsvorrichtung (70) gasstromab des Calcinators (20) angeordnet ist, wobei die Vorrichtung einen Ofencalcinator (21) und einen Ofenvorwärmer (11) aufweist, wobei der Gasstrom aus dem Ofen (30) in den Ofencalcinator (21) und aus dem Ofencalcinator (21) in den Ofenvorwärmer (11) geleitet wird, wobei der mineralische Stoff anteilig in den Ofenvorwärmer (11) eingebracht wird, wobei der den Ofenvorwärmer (11) verlassende Feststoffstrom auf den Calcinator (20) und den Ofencalcinator (21) aufgeteilt wird, wobei eine lastabhängige anteilige Rückführung des dem Vorwärmer (10) verlassenden Gasstromes in das sauerstoffreiches Gas zwischen der Sauerstoffquelle (60) und dem Calcinator (20) erfolgt.

2. Verfahren nach Anspruch 1, **dadurch gekennzeichnet, dass** das sauerstoffreiches Gas vor dem Calcinator (20) erwärmt wird.

3. Verfahren nach Anspruch 2, **dadurch gekennzeichnet, dass** das sauerstoffreiche Gas vor Eintritt in den Calcinator (20) auf wenigstens 900 °C, bevorzugt auf wenigstens 1050 °C, erhitzt wird.

4. Verfahren nach Anspruch 2, **dadurch gekennzeichnet, dass** das sauerstoffreiche Gas vor Eintritt in den Calcinator (20) auf höchstens 1300 °C, bevorzugt auf höchstens 1200 °C, erhitzt wird.

5. Verfahren nach einem der Ansprüche 2 bis 4, **dadurch gekennzeichnet, dass** das sauerstoffreiches Gas mittels Verbrennung erwärmt wird.

6. Verfahren nach einem der Ansprüche 2 bis 5, **dadurch gekennzeichnet, dass** das sauerstoffreiches Gas mittels eines Wärmetauschers durch das den Vorwärmer (10) verlassende Gas erwärmt wird.

7. Verfahren nach einem der Ansprüche 2 bis 6, **dadurch gekennzeichnet, dass** die Vorrichtung einen hinter dem Ofen (30) angeordneten Materialkühler (40) aufweist, wobei das sauerstoffreiche Gas als Kühlgasstrom durch den Materialkühler (40) geführt und dadurch im Materialkühler (40) erwärmt wird.

8. Verfahren nach einem der Ansprüche 2 bis 6, **dadurch gekennzeichnet, dass** die Vorrichtung einen hinter dem Ofen (30) angeordneten Materialkühler (40) aufweist, wobei der Materialkühler (40) von einem Kühlgasstrom durchströmt wird, wobei das sauerstoffreiches Gas mittels des Kühlgasstromes in einem Wärmetauscher erwärmt wird.

9. Verfahren nach einem der vorstehenden Ansprüche, **dadurch gekennzeichnet, dass** bei sich verringernder Verfügbarkeit elektrischer Energie die anteilige Rückführung des dem Vorwärmer (10) verlassenden Gasstromes in das sauerstoffreiches Gas zwischen der Sauerstoffquelle (60) und dem Calcinator (20) erhöht wird.

10. Verfahren nach Anspruch 9, **dadurch gekennzeichnet, dass** der Anteil der Rückführung so gewählt wird, den aus dem Calcinator (20) austretenden Volumenstrom des CO₂-haltigen Gases konstant zu halten.

11. Verfahren nach einem der Ansprüche 9 bis 10, **dadurch gekennzeichnet, dass** bei sich verringernder Verfügbarkeit elektrischer Energie der Anteil an des in den Vorwärmer (10) eingebrachten mineralischen Stoffes im Verhältnis zum in den Ofenvorwärmer (11) eingebrachten mineralischen Stoffes reduziert wird und/oder der Anteil des den Ofenvorwärmer (11) verlassende Feststoffstrom, der dem Calcinator (20) zugeführt wird, erniedrigt wird.

12. Verfahren nach einem der vorstehenden Ansprüche, **dadurch gekennzeichnet, dass** bei minimaler Verfügbarkeit elektrischer Energie 40 bis 60 Vol.-% des dem Vorwärmer (10) verlassenden Gasstromes in das sauerstoffreiche Gas zwischen der Sauerstoffquelle (60) und dem Calcinator (20) zurückgeführt werden, wobei bei maximaler Verfügbarkeit elektrischer Energie weniger als 15 Vol.-%, bevorzugt weniger als 5 Vol.-%, des dem Vorwärmer (10) verlassenden Gasstromes in das sauerstoffreiche Gas zwischen der Sauerstoffquelle (60) und dem Calcinator (20) zurückgeführt werden.

13. Verfahren nach einem der vorstehenden Ansprüche, **dadurch gekennzeichnet, dass** bei Volllast der den Ofenvorwärmer (11) verlassende Feststoffstrom vollständig dem Calcinator (20) zugeführt wird.

## Claims

1. Method for operating a device for thermally treating mineral materials, wherein the device has a preheater (10), a calcinator (20), and a furnace (30), wherein the mineral material is partially introduced into the preheater (10), is guided from the preheater (10) into the calcinator (20) and from the calcinator (20) into the furnace (30), wherein the gas stream of the furnace (30) is guided past the calcinator (20), wherein the device has an oxygen source (60), wherein an oxygen-rich gas having more than 50 vol.% oxygen is guided from the oxygen source (60) to the calcinator (20), wherein the gas stream is conducted from the calcinator (20) into the preheater (10), wherein the device has a carbon dioxide processing device (70), wherein the carbon dioxide processing device (70) is arranged downstream of the calcinator (20) in the direction of the gas stream, wherein the device has a furnace calcinator (21) and a furnace preheater (11), wherein the gas stream from the furnace (30) is conducted into the furnace calcinator (21) and from the furnace calcinator (21) into the furnace preheater (11), wherein the mineral material is partially introduced into the furnace preheater (11), wherein the solid material stream leaving the furnace preheater (11) is divided between the calcinator (20) and the furnace calcinator (21), wherein the gas stream leaving the preheater (10) is partially recirculated in a load-dependent manner into the oxygen-rich gas between the oxygen source (60) and the calcinator (20).

2. Method as claimed in claim 1, **characterised in that** the oxygen-rich gas is heated upstream of the calcinator (20).

3. Method as claimed in claim 2, **characterised in that** the oxygen-rich gas is heated to at least 900°C, preferably to at least 1050°C, before entering the calcinator (20).

4. Method as claimed in claim 2, **characterised in that** the oxygen-rich gas is heated to at most 1300°C, preferably to at most 1200°C, before entering the calcinator (20).

5. Method as claimed in any one of claims 2 to 4, **characterised in that** the oxygen-rich gas is heated by means of combustion.

6. Method as claimed in any one of claims 2 to 5, **characterised in that** the oxygen-rich gas is heated by means of a heat exchanger by the gas leaving the preheater (10).

7. Method as claimed in any one of claims 2 to 6, **characterised in that** the device has a material cooler (40) which is arranged downstream of the furnace (30), wherein the oxygen-rich gas is guided as a cooling gas stream through the material cooler (40) and is thereby heated in the material cooler (40).

8. Method as claimed in any one of claims 2 to 6, **characterised in that** the device has a material cooler (40) which is arranged downstream of the furnace (30), wherein a cooling gas stream flows through the material cooler (40), wherein the oxygen-rich gas is heated by means of the cooling gas stream in a heat exchanger.

9. Method as claimed in any one of the preceding claims, **characterised in that**, when the availability of electrical energy decreases, the partial recirculation of the gas stream leaving the preheater (10) into the oxygen-rich gas is increased between the oxygen source (60) and the calcinator (20).

10. Method as claimed in claim 9, **characterised in that** the amount of partial recirculation is selected so as to keep the volume flow of the CO₂-containing gas exiting the calcinator (20) constant.

11. Method as claimed in any one of claims 9 to 10, **characterised in that**, when the availability of electrical energy decreases, the proportion of the mineral material introduced into the preheater (10) relative to the mineral material introduced into the furnace preheater (11) is reduced and/or the proportion of the solid material stream leaving the furnace preheater (11) and being fed to the calcinator (20) is decreased.

12. Method as claimed in any one of the preceding claims, **characterised in that**, when the availability of electrical energy is at a minimum, 40 to 60 vol.% of the gas stream leaving the preheater (10) is recirculated into the oxygen-rich gas between the oxygen source (60) and the calcinator (20), wherein, when the availability of electrical energy is at a maximum, less than 15 vol.%, preferably less than 5 vol.%, of the gas stream leaving the preheater (10) is recirculated into the oxygen-rich gas between the oxygen source (60) and the calcinator (20).

13. Method as claimed in any one of the preceding claims, **characterised in that**, at full load, the solid material stream leaving the furnace preheater (11) is fed completely to the calcinator (20).

## Revendications

1. Procédé de mise en œuvre d'une installation de traitement thermique de matière minérale, dans lequel l'installation a un préchauffeur (10), un calcinateur (20) et un four (30), dans lequel on introduit la matière minérale d'une manière proportionnée dans le préchauffeur (10), on l'envoie du préchauffeur (10) au calcinateur (20) et du calcinateur (20) au four (30), dans lequel on fait passer le courant gazeux du four (30) devant le calcinateur (20), dans lequel l'installation a une source (60) d'oxygène, dans lequel on envoie un gaz riche en oxygène et ayant de 50% en volume d'oxygène de la source (60) d'oxygène au calcinateur (20), dans lequel on fait passer le courant gazeux du calcinateur (20) au préchauffeur (10), dans lequel l'installation a une installation (70) de traitement du dioxyde de carbone, dans lequel l'installation (70) de traitement du dioxyde de carbone est disposée en aval du courant de gaz du calcinateur (20), dans lequel l'installation a un calcinateur (21) de four et un préchauffeur (11) de four, dans lequel on fait passer le courant gazeux du four (30) au calcinateur (21) de four et du calcinateur (21) de four au préchauffeur (11) de four, dans lequel on introduit la matière minérale de manière proportionnée dans le préchauffeur (11) de four, dans lequel on répartit le courant de matière solide quittant le préchauffeur (11) de four entre le calcinateur (20) et le calcinateur (21) de four, dans lequel un retour de manière proportionnée en fonction de la charge, du courant gazeux quittant le préchauffeur (10) dans le gaz riche en oxygène s'effectue entre la source (60) d'oxygène et le calcinateur (20).

2. Procédé suivant la revendication 1, **caractérisé en ce que** l'on chauffe le gaz riche en oxygène avant le calcinateur (20).

3. Procédé suivant la revendication 2, **caractérisé en ce que** l'on porte le gaz riche en oxygène avant l'entrée dans le calcinateur (20) à au moins 900°C, de préférence à au moins 1050°C.

4. Procédé suivant la revendication 2, **caractérisé en ce que** l'on porte le gaz riche en oxygène avant d'entrer dans le calcinateur (20), à 1300°C au plus, de préférence à 1200°C au plus.

5. Procédé suivant l'une des revendications 2 à 4, **caractérisé en ce que** l'on chauffe le gaz riche en oxygène au moyen d'une combustion.

6. Procédé suivant l'une des revendications 2 à 5, **caractérisé en ce que** l'on chauffe le gaz riche en oxygène au moyen d'un échange de chaleur par le gaz quittant le préchauffeur (10).

7. Procédé suivant l'une des revendications 2 à 6, **caractérisé en ce que** l'installation a un refroidisseur (40) de matériau, disposé derrière le four (30), dans lequel on fait passer le gaz riche en oxygène, comme courant de gaz de refroidissement, dans le refroidisseur (40) de matériau et on le chauffe ainsi dans le refroidisseur (40) de matériau. ,

8. Procédé suivant l'une des revendications 2 à 6, **caractérisé en ce que** l'installation a un refroidisseur (40) de matériau disposé derrière le four (30), dans lequel on fait passer un courant de gaz de refroidissement dans le refroidisseur (40) de matériau, dans lequel on chauffe le gaz riche en oxygène au moyen du courant de gaz de refroidissement dans un échangeur de chaleur.

9. Procédé suivant l'une des revendications précédentes, **caractérisé en ce que**, s'il y a une diminution de la disponibilité de l'énergie électrique, on augmente le retour, de manière proportionnée du courant gazeux quittant le préchauffeur (10) dans le gaz riche en oxygène entre la source (60) d'oxygène et le calcinateur (20).

10. Procédé suivant la revendication 9, **caractérisé en ce que** l'on choisit la proportion du retour de manière à maintenir constant le courant en volume du gaz contenant du CO2 sortant du calcinateur (20).

11. Procédé suivant l'une des revendications 9 à 10, **caractérisé en ce que**, s'il y a une diminution de la disponibilité de l'énergie électrique, on réduit la proportion de matière minérale introduite dans le préchauffeur (10) par rapport à la matière minérale introduite dans le préchauffeur (11) de four et/ou on abaisse la proportion du courant de matière solide, qui quitte le préchauffeur (11) de four et qui est envoyé au calcinateur (20).

12. Procédé suivant l'une des revendications précédentes, **caractérisé en ce qu'**en cas de disponibilité de l'énergie électrique, on retourne de 40 à 60% en volume du courant gazeux quittant le préchauffeur (10) dans le gaz riche en oxygène entre la source (60) d'oxygène et le calcinateur (20), dans lequel, si la disponibilité d'énergie électrique est maximum, on retourne moins de 15% en volume, de préférence moins de 5% en volume, du courant gazeux quittant le préchauffeur (10) dans le gaz riche en oxygène entre la source (60) d'oxygène et le calcinateur (20).

13. Procédé suivant l'une des revendications précédentes, **caractérisé en ce qu'**en pleine charge, on envoie complètement au calcinateur (20) le courant de matière solide quittant le préchauffeur (11) de four.
